# EUROPEAN PATENT SPECIFICATION

(11) **EP 1 989 042 B1**
(45) Date of publication and mention of the grant of the patent: **02.08.2017**
(21) Application number: 07712731.4
(22) Date of filing: 16.02.2007
(51) Int. Cl.: B32B 1/08, F16L 11/04, B29C 47/00

(54) **PIPE FITTING**
ROHRVERBINDUNG
RACCORD DE CANALISATION

(30) Priority: 24.02.2006 GB 0603743
(43) Date of publication of application: 12.11.2008
(73) Proprietor: GE Oil & Gas UK Limited, Nailsea Bristol BS48 1BS (GB); Celanese Sales Germany GmbH, 65843 Sulzbach (DE)
(72) Inventor: RAUDIES, Dirk, 56479 Elsoff (DE); BULMER Graeme, Tyne & Wear NE39 1EL (GB)
(74) Representative: HGF Limited
(86) International application number: PCT/GB2007/000554
(87) International publication number: WO 2007/096589

(56) References cited:
- EP-A- 1 582 797
- EP-A1- 0 900 650
- WO-A1-2005/019341
- US-A- 5 601 893
- US-A1- 2003 005 973
- US-B1- 6 485 806

## Description

The present invention relates to a multi-layer flexible pipe of the type for conveying oil or gas or other such fluid. In particular, but not exclusively, the present invention provides such a flexible pipe and discloses materials and a method for manufacturing such a flexible pipe which has a desirable temperature resistance and which has a desirable flexibility.

There are different types of submarine pipes. These are pipes which may be sunk under great depths of sea and which can be used to convey crude oil or gas or some other such fluid from a collection point to a delivery point. It will be understood that such pipes are also applicable to overland and shallow water applications. It is well known that in the art these types of pipes are divided into two broad classes, namely rigid pipes and flexible pipes. The former are normally made of steel and may sometimes be coated in concrete. They are capable of being laid in very deep water. Flexible pipes are normally made up of a number of layers of composites and reinforcing materials such as steel braids. Since the walls of such flexible pipes are made up of a number of interacting layers those walls tend to be thick.

In such a typical and well known "flexible pipe" fluid to be conveyed flows down a central bore which is formed by a core layer which is often referred to as a carcass. An inner surface of this core layer determines the bore whilst an outer surface must be made impervious to penetration by the fluid flowing in the bore. A bore-fluid retaining layer is thus formed at the outer surface of the carcass. This forms a barrier polymer layer which helps prevent oil or gas escaping from the central bore. The layer also prevents ingress of fluid which may otherwise contaminate the bore-fluid. Other layers are formed outwardly in the multi-layer flexible pipe. For example a set of layers of reinforcement wires and an external protection sheath.

One problem associated with flexible pipes of this type is that they are required to flex. This permits the pipe to be laid using a rolling process and also permits the pipe to flex under conditions on site without failure. A particular problem posed by this is that the materials forming each of the layers in such a flexible pipe must be selected so as to produce a desired level of flexibility and also longevity. Flexible pipes thus need a temperature resistance so that they can perform for periods of time over twenty years and in some instances over twenty five years. Also the flexible pipes must have a high chemical resistance so that they can continue to function without chemically degrading as they age.

The degree of flexibility of flexible pipes is determined by the flexibility of the various materials forming the various layers in the multi-layer structure. For layers such as the barrier polymer layer which forms a fluid barrier and which are often formed from thermoplastic materials a statistic which determines the flexibility of that layer and thus of the pipe is the elongation at yield. If the elongation at yield of a thermoplastic layer is too low then when the flexible pipe is flexed the polymers in the layer may be strained beyond their elastic limit which will cause permanent deformation and thus failure of a pipe. It is known that there has been a trade off between temperature resistance and desirable elongation at yield statistic.

EP1582792, EP10900650, US6,485,806 and US 2003/005973 disclose a different type of flexible pipe.

It is an aim of embodiments of the present invention to at least partly mitigate the above-mentioned problems.

It is an aim of embodiments of the present invention to provide a flexible pipe which can operate continuously for twenty or more years at temperatures over 150°C.

It is an aim of embodiments of the present invention to provide a flexible pipe which has an elongation at yield of greater than 5% at 23°C.

It is an aim of embodiments of the present invention to provide a flexible pipe which has both a favourable elongation at yield characteristic as well as a high temperature resistance.

It is an aim of embodiments of the present invention to provide a method for producing such a flexible pipe.

In accordance with a first aspect of the present invention there is provided a multi-layer flexible pipe which may be sunk under great depths of sea for conveying a target fluid such as oil or gas or other such fluid, comprising:
a carcass layer arranged to provide an inner bore along which a fluid can flow;
at least one barrier layer having a tensile elongation at yield of greater than 5% at a temperature of 23°C,
a hoop strength layer, a tensile strength layer and at least one external fluid barrier layer provided radially outwards of the barrier layer, wherein
said barrier layer comprises polyphenylenesulphide (PPS).

In accordance with a second aspect of the present invention there is provided a method for providing a multi-layer flexible pipe which may be sunk under great depths of sea for conveying a target fluid such as oil or gas or other such fluid comprising the steps of:
providing a carcass layer having an inner bore along which a target fluid can flow;
providing at least one barrier layer having a tensile elongation at yield of greater than 5% at a temperature of 23°C,
providing a hoop strength layer, a tensile strength layer and at least one external fluid barrier layer radially outwards of the barrier layer, wherein
said barrier layer comprises polyphenylenesulphide (PPS).

Embodiments of the present invention provide a multi-layer flexible pipe which includes as a barrier layer, or as part of a fluid barrier layer, a polymer layer having a tensile elongation at yield of greater than 5% at a temperature of 23°C. This ensures that the flexible pipe will be flexible enough to be located at a desired location and to perform adequately at that location for extended periods of time.

Embodiments of the present invention provide a flexible pipe which includes a fluid barrier layer or part of a fluid barrier layer which is able to withstand temperatures greater than 150°C continuously for extended periods of time.

Embodiments of the present invention will now be described hereinafter, by way of example only, with reference to the accompanying drawings, in which:
Figure 1 illustrates a cross section through a multi-layer flexible pipe;
Figure 2 illustrates an extrusion station with cooling baths; and
Figure 3 illustrates another view of an extrusion station.

In the drawings like reference numerals refer to like parts.

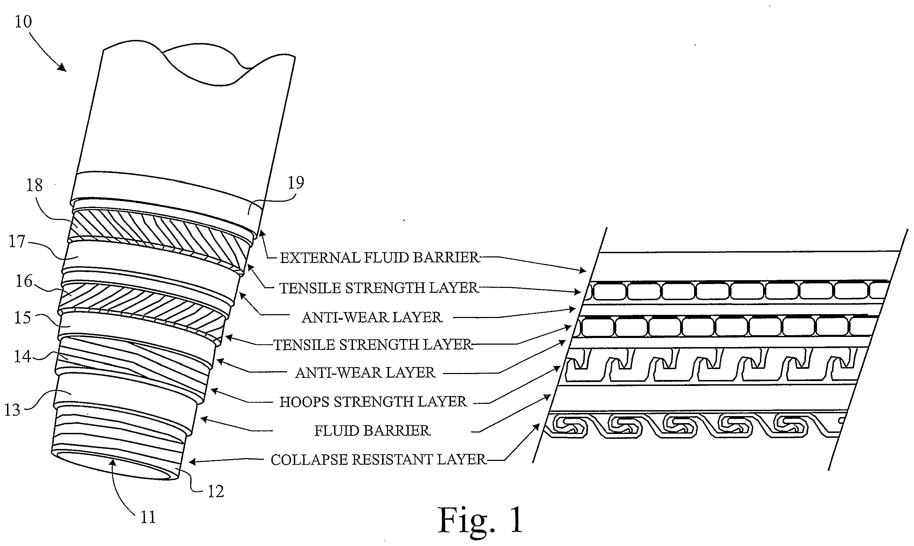

Figure 1 illustrates a cutaway image of a flexible pipe 10 according to an embodiment of the present invention. The flexible pipe 10 is a multi-layer pipe which may be used, amongst other purposes, for conveying a fluid such as crude oil export oil or a gas. Such fluids may be referred to as typical oil and gas field fluids. Each layer of the multi-layer flexible pipe is able to move with respect to the next layer. It will be understood however that embodiments of the present invention are not restricted to any specific number of multi-layers nor to the fact that one or more of the layers may be bonded to another layer.

Fluid flows through an internal bore 11 which is formed by the inner surface of a central core layer commonly known as a carcass 12. This forms a collapse resistant layer. The core layer is formed from folded wire as is known in the art which may be permeable to fluid either outwardly from the bore or inwardly from the outside of the pipe to the inside. Such flow may either contaminate bore fluid or cause other problems such as loss of bore fluid. A fluid barrier layer 13 is formed in the outside of the collapse resistant layer. This is formed from a thermoplastic material and thus forms a barrier polymer layer. The barrier polymer layer may be formed from one of many varieties of polyphenylenesulfide (PPS) layers. This may either be a neat PPS polymer, and/or a PPS modified with conventional additives such as stabilizers, lubricants, mold release agents, colorants, pigments, nucleating agents, reinforcing agents, and fillers, such as fibrous fillers including glass fibres, and/or a blend of PPS with another polymer, including but not limited to a blend of PPS with a flexibilising component, such as an elastomer and/or a copolymer of PPS.

A hoop strength layer 14 is formed outside the fluid barrier layer and then an anti-wear layer 15 is formed. Outside the anti-wear layer is a first tensile strength layer 16 formed from wires wound in a particular direction. A further anti-wear layer 17 is then provided followed by a second tensile strength layer. An outer external fluid barrier layer 19 is formed which prevents ingress of fluid from the external surroundings of the pipe into any of the inner layers.

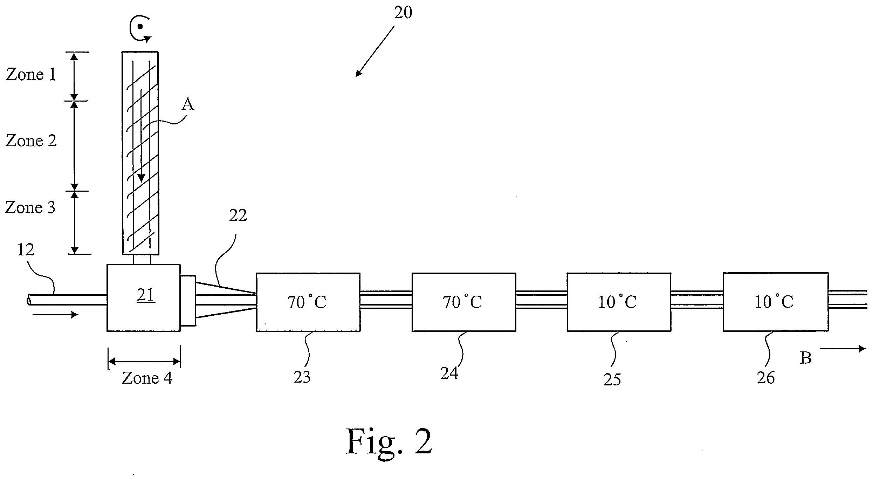

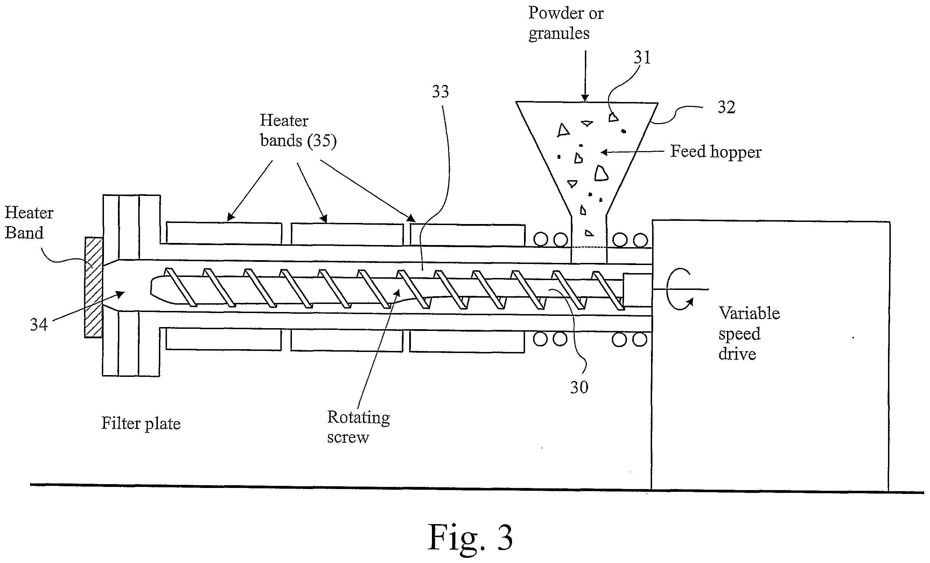

Figure 2 illustrates an extrusion station 20 forming part of a manufacturing process for forming the flexible pipe as shown in figure 1. It will be understood that the manufacturing process includes many different stations each of which may be used to apply one or more of the layers shown in figure 1 as selected. An initial core layer 12 is rolled into an extrusion chamber 21 which is heated via one or more heaters to an appropriate temperature in the range of 300°C to 330°C. Preferably at 305°C. The core layer is a metal layer formed from interlink wires as is known in the art. Molten thermoplastic material is directed into the extrusion chamber 21 along a path indicated by arrow A in figure 2. This movement is achieved by driving a central rotating screw within an outer casing. This is illustrated more clearly in figure 3 in which the rotating screw 30, which has a variable diameter, is driven at a variable and selectable speed by a variable speed motor (not shown). Powder or granules 31 of the polymer material which will form the barrier polymer layer are loaded into a feed hopper 32. These granules fall into a central bore region 33 and are directed towards the extruding chamber 34 by the rotating motion of the screw 30. One or more heating bands 35 (or zones) are located around the extrusion station. Heaters are placed around the extrusion path and chamber to generate a desired temperature gradient from the relatively cold end close to the hopper to the heated end by the extrusion chamber. Heaters in the first heater band can generate temperatures in the range 285°C to 325°C. Preferably at 300°C. Heaters in second heater band can generate temperatures in the region of 300°C to 330°C. Preferably 310°C. Heaters in the third heater band closest to the extrusion chamber generate temperatures in the range 310°C to 335°C. Preferably 315°C. In this way the powder or granules fed into the hopper will be molten and at a desired viscosity in the extrusion chamber 34 within the extruding chamber 20. As the pipe 12 is passed through this chamber in a direction out of the neck region in figure 3 molten thermoplastic material forms a layer on the outside of the piping. To aid the process the core layer may be heated by heaters prior to its entry into the extrusion chamber. Preferably the core layer temperature may be set to between 30°C to 40°C. By selecting the dimensions of a narrowing region 22 the thickness of the barrier polymer layer formed during the extrusion process may be selected. Other methods for selecting the thickness may be used, for example by varying the speed of delivery and extraction of the core layer. By selecting the profile of the narrowing neck so as to narrow to an opening only just admitting the pipe a thin layer of barrier polymer layer can be generated. If the neck is not narrowed so much then a thicker layer of barrier polymer layer is developed.

A neat PPS, a modified PPS), or a blend of PPS with another polymer are suitable thermoplastic materials for forming a flexible pipe having desired characteristics according to embodiments of the present invention. PPS is a high-temperature thermoplastic material that offers an excellent combination of thermal mechanical and chemical resistance. By introducing a flexibilising component to PPS a multi-layer flexible pipe can be provided which has high temperature resistance and which satisfies desirable flexibleness. The PPS used preferably is a blend of PPS with a flexibilising component, such as an elastomer. In particular, a barrier polymer layer designed to withstand temperatures greater than 150°C continuously for more than twenty years can be provided. Embodiments of the present invention can provide a barrier polymer layer designed to withstand temperatures greater than 200°C continuously for more than twenty five years. In addition the barrier polymer layer so formed has a tensile elongation at yield of greater than 5% at a temperature of 23°C. Embodiments of the present invention provide a barrier polymer layer that has a tensile elongation at yield of greater than 7% at a temperature of 23°C.

Preferably an embodiment of the present invention uses an example of a PPS blended with a flexibilising component. One such material is the commercially available Fortron® SKX-479 available from Ticona GmbH, Kelsterbach, Germany. Alternatively Fortron FX 4372T6 may be used. It is to be understood that the present invention is not limited to the use of only these two named products. Rather the invention is broadly applicable to the use of materials having one or more characteristic features shared with these materials.

As illustrated in figure 2 a number of cooling baths may be used to cool the barrier polymer layer so as to achieve an agreeable end product. An initial cooling node 23 maintains a temperature of between 70°C and 80°C. The pipe passes through this zone for a number of seconds as it is rolled in a motion indicated by arrow B in figure 2. A further cooling bath 24, is arranged to also maintain a temperature of between 70°C and 80°C, may also be used as may still further baths 25 and 26 which are set at around 15°C.

By raising the temperature of the flexibilised PPS in its granular form to above its melting point and then reforming and cooling the PPS with flexibilising components into the shape of a continuous hollow profile a barrier layer around the carcass can be formed. It will be appreciated that the temperature settings may be adjusted and controlled according to predetermined selected ranges so as to control temperatures in both the heating and cooling zones of the extrusion station.
Embodiments of the present invention have been described hereinabove by way of example only. It will be understood that the present invention is not restricted to the specific details of the embodiments described. At least one tensile strength layer and at least one external fluid barrier layer are provided. Embodiments of the present invention provide a multi-layer non-bonded flexible pipe for conveying oil and gas field fluids.
Whilst the fluid barrier layer has been described as a single layer the fluid barrier layer 13 may in fact itself by formed as a multi-layer structure with only one or more of these layers being formed from the modified PPS as hereinabove described. Other layers in such a multi-layer barrier layer may be selected from the list of HDPE, MDPE, PP, PA-II, PA-12, TPE and/or PVDF.
Also it will be understood that embodiments of the present invention are not restricted to undersea pipe types. Rather the present invention may be applied in any pipe application where temperature resistance, chemical resistance and flexibility are desirable characteristics.

## Claims

1. A multi-layer flexible pipe which may be sunk under great depths of sea for conveying a target fluid such as oil or gas or other such fluid, comprising:
a carcass layer arranged to provide an inner bore along which a fluid can flow;
at least one barrier layer having a tensile elongation at yield of greater than 5% at a temperature of 23 °C,
a hoop strength layer, a tensile strength layer and at least one external fluid barrier layer provided radially outwards of the barrier layer, wherein
said barrier layer comprises polyphenylenesulphide (PPS).

2. The flexible pipe as claimed in claim 1 wherein said barrier layer provides a flexible pipe for withstanding temperatures greater than 150 °C continuously for more than twenty years.

3. The flexible pipe as claimed in any one of claims 1 or 2 wherein the barrier layer has an elongation at yield of at least 7% at a temperature of 23 °C.

4. The flexible pipe as claimed in any one of claims 1 to 3 wherein said barrier layer is an extruded layer.

5. The flexible pipe as claimed in any one of claims 1 to 4 wherein said barrier layer comprises a blend of PPS with a flexibilising component and optionally said flexibilising component is an elastomer.

6. The flexible pipe as claimed in any one of claims 1 to 4 wherein said barrier layer comprises a copolymer of PPS.

7. The flexible pipe as claimed in claims 1 to 5 wherein said barrier layer comprises a PPS and/or copolymer of PPS that is modified with conventional additives.

8. The flexible pipe as claimed in any preceding claim wherein optionally (a) said barrier layer comprises a barrier polymer layer and/or (b) said target fluid comprises crude oil or said target fluid comprises a gas or said target fluid comprises export oil.

9. The flexible pipe as claimed in any preceding claim wherein optionally (a) said barrier layer comprises a bore-fluid retaining layer and/or (b) said barrier layer directly surrounds the core layer and/or (c) said multi-layer flexible pipe has three or more layers and/or (d) said barrier layer is disposed in a spaced apart relationship from said core layer and optionally one or more intermediate layers are located between said core layer and said barrier layer and/or (e) said barrier layer has a high creep resistance.

10. A flexible pipe as claimed in any preceding claim wherein optionally (a) said barrier layer provides a layer with a high chemical resistance and/or (b) said flexible pipe comprises a non-bonded flexible pipe and/or (c) said core layer comprises a collapse-resistant layer and/or (d) said barrier layer comprises a fluid barrier layer.

11. The flexible pipe as claimed in any preceding claim wherein the at least one barrier layer is an innermost polymer extruded layer located beneath the hoop strength layer.

12. The flexible pipe as claimed in any preceding claim wherein said barrier layer comprises one layer of a multi-layer barrier layer and optionally the multi-layer barrier layer comprises one or more layers of a further barrier material and optionally the further barrier material is selected from the list of HDPE, MDPE, PP, PA-11, PA-12, TPE, and PVDF.

13. The flexible pipe as claimed in any preceding claim wherein said barrier polymer layer has a melting point of more than 150°C.

14. A method for providing a multi-layer flexible pipe which may be sunk under great depths of sea for conveying a target fluid such as oil or gas or other such fluid comprising the steps of:
providing a carcass layer having an inner bore along which a target fluid can flow;
providing at least one barrier layer having a tensile elongation at yield of greater than 5% at a temperature of 23 °C,
providing a hoop strength layer, a tensile strength layer and at least one external fluid barrier layer radially outwards of the barrier layer, wherein
said barrier layer comprises polyphenylenesulphide (PPS).

15. The method as claimed in claim 14 wherein the barrier layer comprises a blend of polyphenylenesulfide (PPS).

16. The method as claimed in claim 14 further comprising:
providing a multi-layer flexible pipe for withstanding temperatures greater than 150°C continuously for more than twenty years.

17. The method as claimed in any one of claims 14 to 16 further comprising the steps of:
melting modified PPS in a feed hopper;
providing the melted polymer at an extrusion chamber; and
forming a barrier layer around the inner carcass layer at an extrusion station.

18. The method as claimed in claim 17 further comprising establishing two or more temperature zones in a melting node to thereby provide molten barrier material at the extrusion chamber.

19. The method as claimed in claim 18 further comprising:
providing a plurality of cooling baths to cool the barrier layer on said core layer subsequent to the core layer being passed through the extrusion chamber.

20. The method as claimed in claim 15 wherein said blend of PPS comprises a blend of PPS with a flexibilising agent.

21. The method as claimed in any one of claims 14 to 20 wherein said barrier layer comprises a barrier polymer layer.

## Patentansprüche

1. Mehrschichtiges biegsames Rohr, das in große unterseeische Tiefen versenkt werden kann, um ein Zielfluid wie beispielsweise Öl oder Gas oder ein anderes derartiges Fluid zu befördern, aufweisend:
eine Karkassenlage, angeordnet, um eine Innenbohrung bereitzustellen, entlang der ein Fluid fließen kann;
mindestens eine Sperrschicht mit einer Zugdehnung mit einer Längenänderung von mehr als 5 % bei einer Temperatur von 23 °C,
eine Ringsteifigkeitsschicht, eine Reißfestigkeitschicht und mindestens eine externe Fluidsperrschicht, die radial auswärts der Sperrschicht bereitgestellt wird, wobei die Sperrschicht Polyphenylensulfid (PPS) aufweist.

2. Biegsames Rohr nach Anspruch 1, wobei die Sperrschicht ein biegsames Rohr bereitstellt, um Temperaturen von über 150 °C für mehr als zwanzig Jahre standzuhalten.

3. Biegsames Rohr nach einem der Ansprüche 1 oder 2, wobei die Sperrschicht eine Verlängerung mit einer Längenänderung von mindestens 7 % bei einer Temperatur von 23 °C hat.

4. Biegsames Rohr nach einem der Ansprüche 1 bis 3, wobei die Sperrschicht eine extrudierte Schicht ist.

5. Biegsames Rohr nach einem der Ansprüche 1 bis 4, wobei die Sperrschicht ein Gemisch aus PPS mit einer flexibilisierenden Komponente aufweist, und die flexibilisierende Komponente optional ein Elastomer ist.

6. Biegsames Rohr nach einem der Ansprüche 1 bis 4, wobei die Sperrschicht ein Copolymer von PPS aufweist.

7. Biegsames Rohr nach einem der Ansprüche 1 bis 5, wobei die Sperrschicht ein PPS und/oder Copolymer von PPS aufweist, das mit herkömmlichen Additiven modifiziert wird.

8. Biegsames Rohr nach einem der vorhergehenden Ansprüche, wobei optional (a) die Sperrschicht eine Polymer-Sperrschicht aufweist und/oder (b) das Zielfluid Rohöl aufweist oder das Zielfluid ein Gas aufweist oder das Zielfluid zu exportierendes Öl aufweist.

9. Biegsames Rohr nach einem der vorhergehenden Ansprüche, wobei optional (a) die Sperrschicht eine Bohrungsfluid zurückhaltende Schicht aufweist und/oder (b) die Sperrschicht die Kernschicht direkt umgibt und/oder (c) das mehrschichtige biegsame Rohr drei oder mehr Schichten hat und/oder (d) die Sperrschicht in einem beabstandetem Verhältnis von der Kernschicht angeordnet ist und sich optional eine oder mehrere Zwischenschichten zwischen der Kernschicht und der Sperrschicht befinden und/oder (e) die Sperrschicht eine hohe Kriechbeständigkeit hat.

10. Biegsames Rohr nach einem der vorhergehenden Ansprüche, wobei optional (a) die Sperrschicht eine Schicht mit hoher chemischer Widerstandsfähigkeit bereitstellt und/oder (b) das biegsame Rohr ein nichtgebundenes biegsames Rohr aufweist und/oder (c) die Kernschicht eine druckresistente Schicht aufweist und/oder (d) die Sperrschicht eine Fluidsperrschicht aufweist.

11. Biegsames Rohr nach einem der vorhergehenden Ansprüche, wobei die mindestens eine Sperrschicht eine innerste extrudierte Polymerschicht ist, die sich unter der Ringsteifigkeitsschicht befindet.

12. Biegsames Rohr nach einem der vorhergehenden Ansprüche, wobei die Sperrschicht eine Schicht aus einer mehrschichtigen Sperrschicht aufweist, und optional die mehrschichtige Sperrschicht eine oder mehrere Schichten aus einem weiteren Sperrenmaterial aufweist, und optional das weitere Sperrenmaterial aus der Liste mit HDPE, MDPE, PP, Pa-11, PA-12, TPE und PVDF ausgewählt wird.

13. Biegsames Rohr nach einem der vorhergehenden Ansprüche, wobei die Polymer-Sperrschicht einen Schmelzpunkt von über 150 °C hat.

14. Verfahren zum Bereitstellen eines mehrschichtigen biegsamen Rohrs, das in große unterseeische Tiefen versenkt werden kann, um ein Zielfluid wie beispielsweise Öl oder Gas oder ein anderes derartiges Fluid zu befördern, aufweisend die Schritte zum:
Bereitstellen einer Karkassenlage mit einer Innenbohrung, entlang der ein Fluid fließen kann;
Bereitstellen von mindestens einer Sperrschicht mit einer Zugdehnung mit einer Längenänderung von mehr als 5 % bei einer Temperatur von 23 °C,
Bereitstellen einer Ringsteifigkeitsschicht, einer Reißfestigkeitschicht und mindestens einer externen Fluidsperrschicht radial auswärts der Sperrschicht, wobei die Sperrschicht Polyphenylensulfid (PPS) aufweist.

15. Verfahren nach Anspruch 14, wobei die Sperrschicht ein Polyphenylensulfid- (PPS) Gemisch aufweist.

16. Verfahren nach Anspruch 14, ferner aufweisend:
Bereitstellen eines mehrschichtigen biegsamen Rohrs, das Temperaturen von über 150 °C kontinuierlich mehr als zwanzig Jahre standhält.

17. Verfahren nach einem der Ansprüche 14 bis 16, ferner aufweisend die Schritte zum:
Schmelzen von modifiziertem PPS in einem Zuführtrichter;
Bereitstellen des geschmolzenen Polymers für eine Extrusionskammer; und
Ausbilden einer Sperrschicht um die innere Karkassenlage an einer Extrusionsstation.

18. Verfahren nach Anspruch 17, ferner aufweisend ein Bestimmen von zwei oder mehr Temperaturzonen in einem Schmelzknoten, um dadurch geschmolzenes Sperrenmaterial für die Extrusionskammer bereitzustellen.

19. Verfahren nach Anspruch 18, ferner aufweisend;
Bereitstellen einer Mehrzahl von Kühlbädern zum Abkühlen der Sperrschicht auf der Kernschicht im Anschluss an ein Hindurchführen der Kernschicht durch die Extrusionskammer.

20. Verfahren nach Anspruch 15, wobei das PPS-Gemisch ein Gemisch von PPS mit einem flexibilisierenden Wirkstoff aufweist.

21. Verfahren nach einem der Ansprüche 14 bis 20, wobei die Sperrschicht eine Polymer-Sperrschicht aufweist.

## Revendications

1. Tuyau souple multicouche pouvant être immergé à de grandes profondeurs dans la mer destiné à transporter un fluide cible, tel que du pétrole ou du gaz, ou un autre fluide de ce type, comprenant :
une couche de carcasse conçue pour fournir un alésage interne le long duquel peut s'écouler un fluide ;
au moins une couche formant barrière ayant un allongement en traction au seuil d'écoulement supérieur à 5 % à une température de 23 °C ;
une couche de résistance annulaire, une couche de résistance à la traction et au moins une couche formant barrière à des fluides externes, disposées radialement vers l'extérieur de la couche formant barrière, dans lequel
ladite couche formant barrière comprend du polysulfure de phénylène (PPS).

2. Tuyau souple selon la revendication 1, dans lequel ladite couche formant barrière fournit un tuyau souple permettant de résister à des températures supérieures à 150 °C continues pendant plus de vingt ans.

3. Tuyau souple selon l'une ou l'autre des revendications 1 ou 2, dans lequel la couche formant barrière a un allongement au seuil d'écoulement d'au moins 7 % à une température de 23 °C.

4. Tuyau souple selon l'une quelconque des revendications 1 à 3, dans lequel ladite couche formant barrière est une couche extrudée.

5. Tuyau souple selon l'une quelconque des revendications 1 à 4, dans lequel ladite couche formant barrière comprend un mélange de PPS auquel est ajouté un composé conférant de la flexibilité et dans lequel ledit composé conférant de la flexibilité est éventuellement un élastomère.

6. Tuyau souple selon l'une quelconque des revendications 1 à 4, dans lequel ladite couche formant barrière comprend un copolymère de PPS.

7. Tuyau souple selon l'une quelconque des revendications 1 à 5, dans lequel ladite couche formant barrière comprend du PPS et/ou un copolymère de PPS modifié au moyen d'additifs classiques.

8. Tuyau souple selon l'une quelconque des revendications précédentes, dans lequel, éventuellement, (a) ladite couche formant barrière comprend une couche de polymère formant barrière et/ou (b) ledit fluide cible comprend du pétrole brut, ou ledit fluide cible comprend un gaz, ou ledit fluide cible comprend du pétrole d'exportation.

9. Tuyau souple selon l'une quelconque des revendications précédentes, dans lequel, éventuellement, (a) ladite couche formant barrière comprend une couche de maintien d'alésage-fluide et/ou (b) ladite couche formant barrière entoure directement la couche d'âme et/ou (c) ledit tuyau souple multicouche comporte trois couches, ou plus, et/ou (d) ladite couche formant barrière est disposée avec une relation d'espacement par rapport à ladite couche d'âme et une ou plusieurs couches intermédiaires sont éventuellement situées entre ladite couche d'âme et ladite couche formant barrière et/ou (e) ladite couche formant barrière a une haute résistance au fluage.

10. Tuyau souple selon l'une quelconque des revendications précédentes, dans lequel, éventuellement, (a) ladite couche formant barrière fournit une couche à haute résistance chimique et/ou (b) ledit tuyau souple comprend un tuyau souple non collé et/ou (c) ladite couche d'âme comprend une couche résistant à la déformation et/ou (d) ladite couche formant barrière comprend une couche formant barrière à des fluides.

11. Tuyau souple selon l'une quelconque des revendications précédentes, dans lequel l'au moins une couche formant barrière est une couche extrudée de polymère située le plus vers l'intérieur disposée à proximité de la couche de résistance annulaire.

12. Tuyau souple selon l'une quelconque des revendications précédentes, dans lequel ladite couche formant barrière comprend une couche d'une couche formant barrière multicouche et la couche formant barrière multicouche comprend éventuellement une ou plusieurs couches d'un matériau formant barrière supplémentaire et le matériau formant barrière supplémentaire est éventuellement sélectionné dans la liste constituée de HDPE, MDPE, PP, PA-11, PA-12, TPE et de PVDF.

13. Tuyau souple selon l'une quelconque des revendications précédentes, dans lequel ladite couche de polymère formant barrière a un point de fusion supérieur à 150 °C.

14. Procédé de fabrication d'un tuyau souple multicouche qui peut être immergé à de grandes profondeurs sous la mer destiné à transporter un fluide cible tel que du pétrole ou du gaz, ou un autre fluide de ce type, comprenant les étapes consistant à :
utiliser une couche de carcasse comportant un alésage interne le long duquel peut s'écouler un fluide cible ;
utiliser au moins une couche formant barrière ayant un allongement sous traction au seuil d'écoulement supérieur à 5 % à une température de 23 °C,
utiliser une couche de résistance annulaire, une couche de résistance à la traction et au moins une couche formant barrière à des fluides externes en les disposant radialement vers l'extérieur de la couche formant barrière, dans lequel
ladite couche formant barrière comprend du polysulfure de phénylène (PPS).

15. Procédé selon la revendication 14, dans lequel la couche formant barrière comprend un mélange de polysulfure de phénylène (PPS).

16. Procédé selon la revendication 14, comprenant en outre :
la réalisation d'un tuyau souple multicouche pour qu'il résiste à des températures supérieures à 150 °C continues pendant plus de vingt ans.

17. Procédé selon l'une quelconque des revendications 14 à 16, comprenant en outre les étapes consistant à :
faire fondre du PPS modifié dans une trémie d'alimentation ;
amener le polymère fondu au niveau d'une chambre d'extrusion ; et
former une couche formant barrière autour de la couche de carcasse intérieure au niveau d'un poste d'extrusion.

18. Procédé selon la revendication 17, comprenant en outre l'établissement de deux zones de température, ou plus, dans un noeud de fusion de façon à ainsi obtenir un matériau formant barrière fondu au niveau de la chambre d'extrusion.

19. Procédé selon la revendication 18, comprenant en outre :
l'utilisation de plusieurs bains de refroidissement pour refroidir la couche formant barrière disposée sur ladite couche d'âme à la suite du passage de la couche d'âme dans la chambre d'extrusion.

20. Procédé selon la revendication 15, dans lequel ledit mélange de PPS comprend un mélange de PPS avec un agent conférant de la flexibilité.

21. Procédé selon l'une quelconque des revendications 14 à 20, dans lequel ladite couche formant barrière comprend une couche de polymère formant barrière.
